# EUROPÄISCHE PATENTSCHRIFT

(11) **EP 4 407 198 B1**
(45) Veröffentlichungstag und Bekanntmachung des Hinweises auf die Patenterteilung: **02.07.2025**
(21) Anmeldenummer: 24151856.2
(22) Anmeldetag: 15.01.2024
(51) Int. Cl.: F16B 21/02, H02S 20/00

(54) **SOLARMODULBEFESTIGUNGSSYSTEM MIT SICHERUNGSBOLZEN**
SOLAR MODULE FASTENING SYSTEM WITH LOCKING BOLT
SYSTÈME DE FIXATION DE MODULE SOLAIRE AVEC BOULON DE SÉCURITÉ

(30) Priorität: 27.01.2023 DE 102023102089
(43) Veröffentlichungstag der Anmeldung: 31.07.2024
(73) Patentinhaber: Renusol Europe GmbH, 80807 München (DE)
(72) Erfinder: Balen, Marko, 24257 Schwartbuck (DE); Heck, Dieter, 53579 Erpel (DE); Rossbach, Nils, 51103 Köln (DE); Schumacher, Christian, 50733 Köln (DE); Schwarz, Thomas, 53809 Ruppichteroth (DE); Steuer, Sven, 51766 Engelskirchen (DE)
(74) Vertreter: Patentanwälte Bauer Vorberg Kayser

(56) Entgegenhaltungen:
- DE-A1- 102016 111 983
- DE-U1- 202018 106 348

## Beschreibung

Die Erfindung betrifft ein Solarmodulbefestigungssystem mit mindestens einer auf einem Untergrund, insbesondere an einem Dach befestigbaren Schiene zur Befestigung von Elementen einer Solaranlage, wobei die Schiene eine Wand mit einer Durchgangsöffnung aufweist, durch die ein Sicherungsbolzen einführbar ist.

Zur Anordnung von Solaranlagen, insbesondere Photovoltaik-Modulen (PV-Modulen) auf Flachdächern werden üblicherweise Schienen verwendet, um die Photovoltaik-Module auf den Flachdächern zu positionieren und zu befestigen. Dabei ist es bekannt, Schienen in mehreren Reihen anzuordnen und in einer Reihe mehrere Schienen hintereinander. Die Schienen werden miteinander verbunden, um so eine Art Schachbrettmuster aus parallelen Schienen und dazu quer verlaufenden Verbindungsstücken bzw. Modulen zu erzeugen. Zwei beiden hintereinander angeordneten Schienen sind dabei häufig durch ein Verbindungselement bzw. eine Traufstütze miteinander verbunden. Traufstützen können aber auch an anderer Stelle im Verlauf der Schiene angeordnet sein.

Neben Verbindungselementen und Traufstützen können und werden auch weitere Bauteile mit den Schienen verbunden. Zu diesem Zweck werden Befestigung- oder Sicherungsbolzen verwendet, die in die Durchgangsöffnung in die Wand der Schiene eingeführt werden. Üblicherweise sind die Sicherungsbolzen als Schraube ausgeführt, die dann in der Befestigung- oder Sicherungsposition verschraubt werden und so die verschiedenen Elemente verbinden und halten.

Die Montage bzw. der Zusammenbau der Elemente ist aufgrund des Verschraubungsvorgangs aufwendig und zeitintensiv. Insbesondere besteht auch die Gefahr des Verlierens von Muttern der Sicherungsbolzen. Diese können im ungünstigsten Fall vom Dach herunterfallen, was den Montageaufwand zusätzlich erschwert und verlängert. Ein Montagesystem aus dem Stand der Technik ist in dem Dokument DE 10 2016 111 983 A1 offenbart.

Der Erfindung liegt die Aufgabe zugrunde, eine alternative Ausführungsform eines solchen Solarmodulbefestigungssystems anzugeben. Dieses soll eine einfache und robuste Konstruktion aufweisen, kostengünstig herzustellen und insbesondere auch schnell und einfach zu montieren sein.

Diese Aufgabe wird erfindungsgemäß durch einen Solarmodulbefestigungssystem mit den Merkmalen des Anspruchs 1 sowie durch ein Verfahren zur Befestigung mit den Merkmalen des Anspruchs 8 gelöst.

Demnach weist das Solarmodulbefestigungssystem eine Schiene mit einer Durchgangsöffnung auf, durch die ein Sicherungsbolzen zur Verbindung oder Halterung mit weiteren Elementen eingeführt werden kann.

Unterhalb der Durchgangöffnung ist eine U-förmige Haltenut angeordnet, die eine sich etwa parallel zur Wand erstreckende Nutwand aufweist, über einen Nutboden mit der Wand verbunden und in Richtung der Durchgangöffnung geöffnet ist. Die Haltenut steht seitlich von der Wand 23 ab. Die etwa parallel zur Wand verlaufende Nutwand dient als späteres Widerlager für den Kopf des Sicherungbolzens.

Der erfindungsgemäße Sicherungsbolzen weist einen Schaft und einen Kopf auf, die derart ausgeführt und angeordnet sind, dass der Kopf in einer Ausgangsposition, in der der Schaft in die Durchgangöffnung bis zum Anschlag des Kopfes an der Wand eingeführt ist, ausserhalb der Haltenut angeordnet ist. In einer Sicherungsposition ist der der Sicherungsbolzen gegenüber der Ausgangsposition um eine Längsachse des Schafts verdreht und ragt bereichsweise in die Haltenut hinein.

Wesentlich ist also, dass der Sicherungsbolzen und die Haltenut in Bezug auf Größe, Anordnung und Form derart aufeinander abgestimmt sind, dass der Kopf des Sicherungsbolzens in einer bestimmten Ausrichtung an der relativ nahe an der Durchgangsöffnung heranreichende Nutwand vorbeigeführt werden kann. Hierzu weist der Kopf zumindest einen Bereich auf, dessen Überstand gegenüber dem Schaft geringer ist, als der Abstand einer freien Kante der Nutwand zur Durchgangsöffnung.

Ist der Sicherungsbolzen vollständig eingeführt, wird anschließend der Kopf aus der Ausgangsposition verdreht, bis der entsprechende Bereich in der Haltenut angeordnet ist.

Zusammengefasst erfolgt die Montage folgendermaßen:
- Befestigen der Schiene auf einem Untergrund,
- Ausrichten des Sicherungsbolzens in Bezug auf die Durchgangöffnung und die Nutwand,
- Einführen des Sicherungsbolzens in die Durchgangöffnung der Wand und ggfs. in eine Öffnung in einem zu verbindenden Element,
- Vorbeiführen des Kopfes des Sicherungsbolzens an der Nutwand in eine Ausgangsposition des Sicherungsbolzens,
- Verdrehen des Sicherungsbolzens um die Längsachse des Schafts von der Ausgangsposition in eine Sicherungsposition, in der Kopf bereichsweise in die Haltenut hineinragt.

Die Realisierung verschiedener Bereiche des Kopfs, die sich unterschiedlich weit vom Schaft weg erstrecken, kann auf unterschiedliche Art und Weise realisiert werden. In einer ersten Ausführungsvariante ist der Kopf unrund ausgeführt, beispielsweise eckig, insbesondere drei- oder rechteckig, denkbar ist aber auch eine ovale Grundform. Ein Kopf mit grundsätzlich runder Grundform, bei dem ein Kreissegment (Kreisabschnitt) fehlt, ist ebenfalls möglich. Ein Kreissegment ist eine Teilfläche einer Kreisfläche, die von einem Kreisbogen und einer Kreissehne begrenzt wird.

Alternativ oder zusätzlich kann die gewünschte Funktion auch dadurch erreicht werden, dass der Schaft des Sicherungsbolzens außermittig mit dem Kopf verbunden ist. In diesem Fall könnte auch eine vollständige runde Grundform in die Haltenut hinein und wieder heraus gedreht werden.

Der Kopf ist weiterhin vorzugsweise dadurch gekennzeichnet, dass die Tiefe des Kopfes in Umfangsrichtung unterschiedlich ausgeführt ist, wobei die maximale Tiefe des Kopfes etwa einer lichten Breite der Haltenut entspricht. Dadurch wird ein Eindrehen in die Haltenut erleichtert. Die maximale Tiefe des Kopfes übersteigt vorzugsweise die lichte Breite der Haltenut derart, dass ein Eindrehen des tieferen Bereichs in die Haltenut ein Verklemmen des Kopfes in der Haltenut bewirkt. Die Haltenut und/oder der Kopf wird dabei vorzugsweise elastisch verformt.

Die Tiefe des Kopfes nimmt vorzugsweise entgegen dem Uhrzeigersinn kontinuierlich oder in Stufen zu. Entgegen dem Uhrzeigersinn ist deswegen besonders sinnvoll, weil dann die Drehrichtung beim Eindrehen des Sicherungsbolzens dem üblichen Festdrehen einer Schraube entspricht.

Der Kopf kann an zumindest einer Aussenseite rauigkeitserhöhende Strukturen zur Erhöhung eines Reibschlusses in der Sicherungsposition aufweisen. Dadurch wird gewährleistet, dass sich auch bei Bewegung der Bauteile, beispielsweise aufgrund von Wind, der Sicherungsbolzen nicht zurückdreht und löst. Die Außenseiten können dazu beispielsweise aufgeraut oder beispielsweise mit einer Zackenstruktur versehen sein. Denkbar ist auch, dass die Außenflächen des Kopfes mit einem rauen und/oder elastischen Kunststoffmaterial versehen sind. Die Außenseiten oder Außenflächen sind diejenigen Flächen, die mit der Wand oder einer Innenseite der Nutwand in Kontakt kommen.

Die Erfindung wird anhand der nachfolgenden Figuren näher erläutert. Diese stellen lediglich ein bevorzugtes Ausführungsbeispiel dar und sollen nicht einschränkend zu verstehen sein. Die Abmessungen sind dabei nicht maßstäblich, Dimensionen und Abmessungen können auch geändert abweichen. Es zeigen:
- Fig. 1:: ein Solarmodulbefestigungssystems mit einer Schiene und einem Sicherungsbolzen
- Fig. 2:: das Solarmodulbefestigungssystems mit eigeführtem Sicherungsbolzen in Ausgangsposition,
- Fig. 3:: das Solarmodulbefestigungssystems mit eigeführtem Sicherungsbolzen in einer Zwischenposition,
- Fig. 4:: das Solarmodulbefestigungssystems mit eigeführtem Sicherungsbolzen in einer Sicherungsposition,
- Fig. 5:: das Solarmodulbefestigungssystems mit eigeführtem Sicherungsbolzen in einer Sicherungsposition von oben,
- Fig. 6:: das Solarmodulbefestigungssystems mit eigeführtem Sicherungsbolzen in Ausgangsposition in vereinfachter Schnittdarstellung,
- Fig. 7:: das Solarmodulbefestigungssystems mit eigeführtem Sicherungsbolzen in Sicherungsposition in vereinfachter Schnittdarstellung.

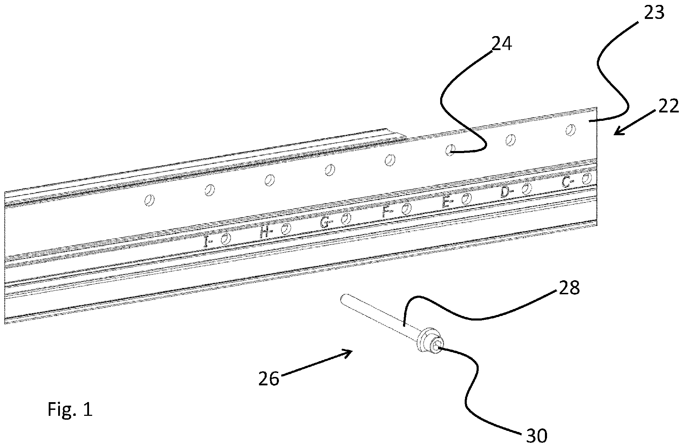

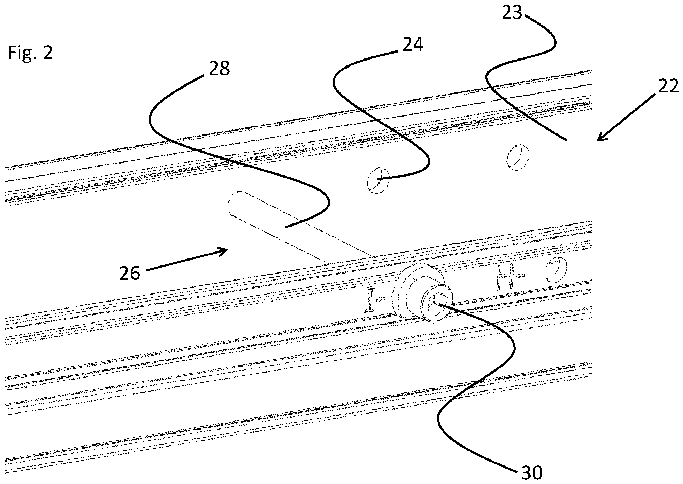

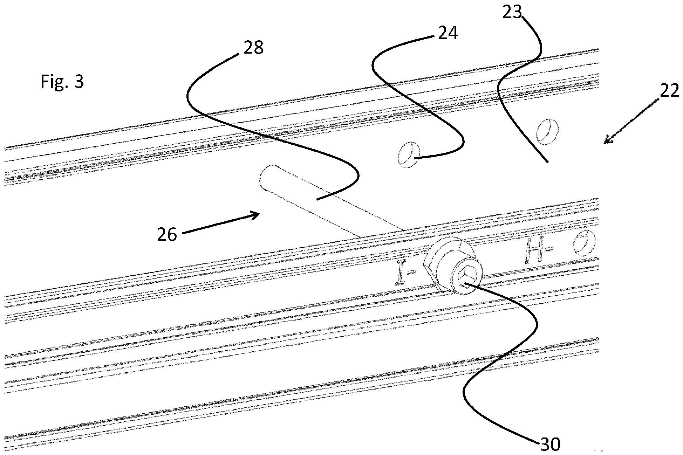

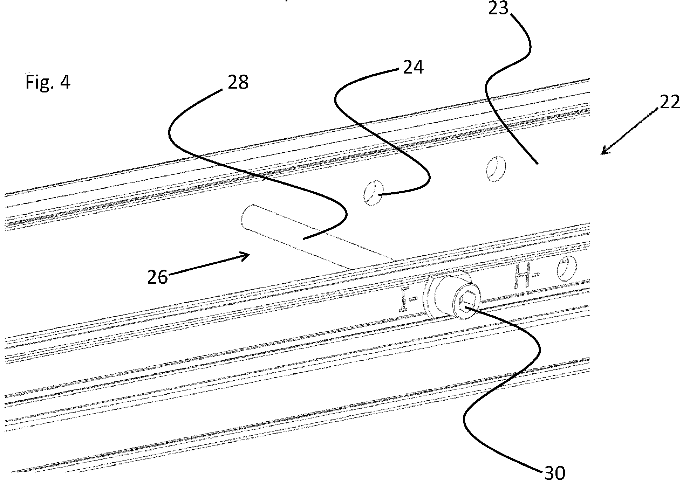

Die Figuren 1 bis 7 zeigen eine bevorzugte Ausführungsvariante eines Solarmodulbefestigungssystems 20. Dieses weist im Wesentlichen eine Schiene 22 mit einer Wand 23 und mit der Schiene 22 verbindbaren Sicherungsbolzen 28 auf.

In die Wand 23 der Schiene 22 sind im gezeigten Ausführungsbeispiel mehrere Durchgangsöffnungen 24 eingebracht, in die ein Schaft 28 des Sicherungsbolzen 26 einführbar ist.

Der Sicherungsbolzen 26 weist einen Kopf 30 auf, der mit dem Schaft 28 verbunden ist. Der Kopf 30 ist mit Ausnahme eines fehlenden Kreissegments rund ausgeführt. Weiterhin ist erkennbar, dass der Kopf 30 im Querschnitt über die Breite des Schafts 28 vorsteht und in einer Ausgangsposition an der Wand 23 zur Anlage kommt.

An die Wand 23 ist eine Haltenut 40 angeformt, die von der Wand 23 absteht und aus einer sich im Wesentlichen parallel zur Wand 23 erstreckenden Nutwand 32 und einem die Nutwand 32 mit der Wand 23 verbindenden Nutboden 34 gebildet ist.

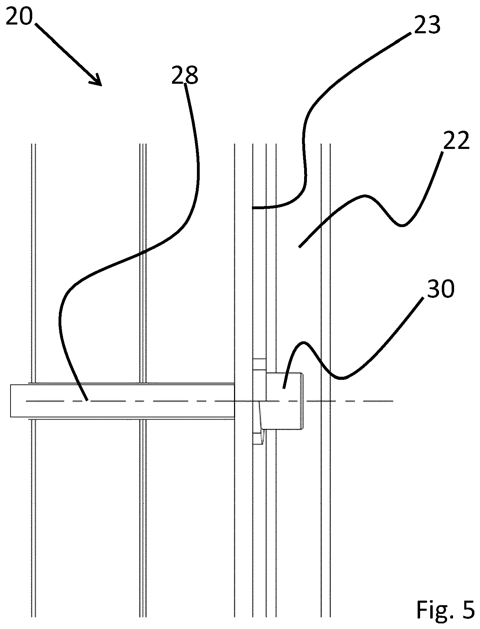

Insbesondere die Figuren 5 bis 7 verdeutlichen, dass der Kopf 30 in seiner Tiefe über seinen Umfang unterschiedlich tief oder dick ausgeführt ist. Im gezeigten Ausführungsbeispiel weist der Kopf entsprechend Stufen unterschiedlicher Tiefe auf, deren Tiefe gegen den Uhrzeigersinn zunimmt. Alternativ ist auch eine kontinuierliche Zunahme der Tiefe möglich.

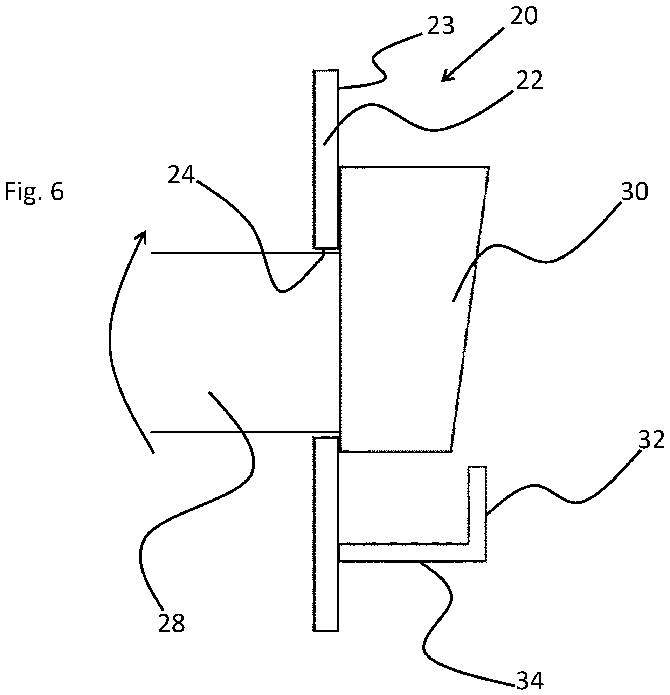

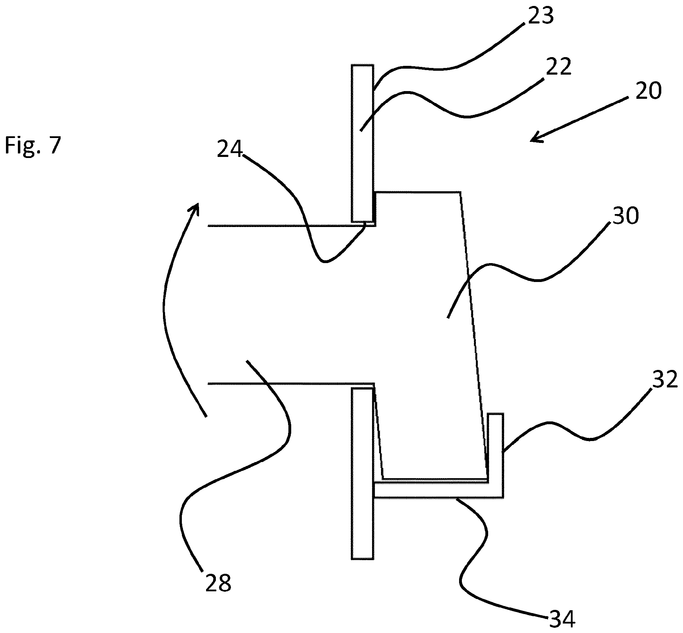

Die Figuren 1 bis 4 verdeutlichen, dass ein Einführen des Sicherungbolzens 26 nur dann möglich ist, wenn der Kopf 30 derart ausgerichtet ist, dass derjenige Bereich, in dem ein Kreissegment fehlt, in Richtung Nutwand 32 ausgerichtet ist. Nur so ist es möglich, den Schaft 28 des Sicherungsbolzens 26 in die Durchgangsöffnung 24 einzuführen. Erst wenn der Kopf 30 mit seiner Innenseite an der Wand 23 anliegt, kann der Bereich mit größerer Tiefe in die Haltenut 40 eingedreht und verspannt bzw. verklemmt werden. Dies verdeutlichen auch die Figuren 6 und 7.

Die Haltenut 40 weist eine lichte Breite NB auf, die etwa der Tiefe zumindest eines in die Haltenut 40 eindrehbaren Bereichs des Kopfes 30 entspricht.

## Patentansprüche

1. Solarmodulbefestigungssystem (20) mit mindestens einer auf einem Untergrund, insbesondere an einem Dach befestigbaren Schiene (22) zur Befestigung von Elementen einer Solaranlage, wobei die Schiene (22) eine Wand (23) mit einer Durchgangsöffnung (24) aufweist, durch die ein Sicherungsbolzen (26) einführbar ist,
**dadurch gekennzeichnet, dass**
- unterhalb der Durchgangöffnung (24) eine U-förmige Haltenut (40) angeordnet ist, die
- eine sich etwa parallel zur Wand (23) erstreckende Nutwand (32) aufweist, die über einen Nutboden (34) mit der Wand (23) verbunden ist,
- in Richtung der Durchgangöffnung (24) geöffnet ist,
- der Sicherungsbolzen (26) einen Schaft (28) und einen Kopf (30) aufweist, die derart ausgeführt und angeordnet sind, dass
- der Kopf (30) in einer Ausgangsposition, in der der Schaft (28) in die Durchgangöffnung (24) bis zum Anschlag des Kopfes (30) an der Wand (23) eingeführt ist, ausserhalb der Haltenut (40) angeordnet ist,
- der Kopf (30) in einer zweiten Sicherungsposition, in der der Sicherungsbolzen (26) gegenüber der Ausgangsposition um eine Längsachse des Schafts verdreht ist und bereichsweise in die Haltenut (40) hineinragt.

2. Solarmodulbefestigungssystem (20) nach Anspruch 1, **dadurch gekennzeichnet, dass** der Schaft (28) des Sicherungsbolzens außermittig mit dem Kopf (30) verbunden ist.

3. Solarmodulbefestigungssystem (20) nach Anspruch 1, **dadurch gekennzeichnet, dass** der Kopf (30) des Sicherungsbolzens (26) unrund ausgeführt ist.

4. Solarmodulbefestigungssystem (20) nach Anspruch 1, **dadurch gekennzeichnet, dass** die Tiefe des Kopfes (30) des Sicherungsbolzens (26) in Umfangsrichtung unterschiedlich ausgeführt ist, wobei die maximale Tiefe des Kopfes (30) etwa einer lichten Breite (NB) der Haltenut (40) entspricht.

5. Solarmodulbefestigungssystem (20) nach Anspruch 1, **dadurch gekennzeichnet, dass** die maximale Tiefe die lichte Breite (NB) der Haltenut (40) derart übersteigt, dass ein Eindrehen des tieferen Bereichs in die Haltenut (40) ein Verklemmen des Kopfes (30) in der Haltenut (40) bewirkt.

6. Solarmodulbefestigungssystem (20) nach Anspruch 4 oder 5, **dadurch gekennzeichnet, dass** die Tiefe des Kopfes (30) in Umfangsrichtung, vorzugsweise entgegen dem Uhrzeigersinn kontinuierlich zunimmt.

7. Solarmodulbefestigungssystem (20) nach einem der Ansprüche 1 bis 6, **dadurch gekennzeichnet, dass** der Kopf (30) an zumindest einer Aussenseite rauigkeitserhöhende Strukturen zur Erhöhung eines Reibschlusses in der Sicherungsposition aufweist.

8. Verfahren zur Befestigung eines Elementes an einer Schiene (22) eines Solarmodulbefestigungssystem (20) nach einem der Ansprüche 1 bis 7, **gekennzeichnet durch** die nachfolgenden Verfahrensschritte
- Befestigen der Schiene (22) auf einem Untergrund,
- Ausrichten des Sicherungsbolzens (26) in Bezug auf die Durchgangöffnung (24) und die Nutwand (32),
- Einführen des Sicherungsbolzens (26) in die Durchgangöffnung (24) der Wand (23),
- Vorbeiführen des Kopfes (30) des Sicherungsbolzens (26) an der Nutwand (32) in eine Ausgangsposition des Sicherungsbolzens (26),
- Verdrehen des Sicherungsbolzens (26) um die Längsachse des Schafts (28) von der Ausgangsposition in eine Sicherungsposition, in der der Kopf (30) bereichsweise in die Haltenut (40) hineinragt.

## Claims

1. Solar module fastening system (20) with at least one rail (22), which can be fastened to a substrate, in particular a roof, for fastening elements of a solar system, wherein the rail (22) has a wall (23) with a through opening (24), through which a securing bolt (26) can be inserted,
**characterized in that**
- a U-shaped retaining groove (40) is arranged underneath the through opening (24), said U-shaped retaining groove
- has a groove wall (32) which extends approximately parallel to the wall (23) and which is connected to the wall (23) via a groove bottom (34),
- is open in the direction of the through opening (24),
- the securing bolt (26) has a shaft (28) and a head (30), which are arranged and designed in such a way that
- in a starting position, in which the shaft (28) is inserted into the through opening (24) up to the stop of the head (30) on the wall (23), the head (30) is arranged outside of the retaining groove (40),
- in a second securing position, in which the securing bolt (26) is rotated, in relation to the starting position, about a longitudinal axis of the shaft, the head (30) projects in sections into the retaining groove (40).

2. Solar module fastening system (20) according to claim 1, **characterized in that** the shaft (28) of the securing bolt is eccentrically connected to the head (30).

3. Solar module fastening system (20) according to claim 1, **characterized in that** the head (30) of the securing bolt (26) is designed to be non-circular.

4. Solar module fastening system (20) according to claim 1, **characterized in that** the depth of the head (30) of the securing bolt (26) is designed to differ in the circumferential direction, wherein the maximum depth of the head (30) approximately corresponds to an inside width (NB) of the retaining groove (40).

5. Solar module fastening system (20) according to claim 1, **characterized in that** the maximum depth exceeds the inside width (NB) of the retaining groove (40) in such a way that a screwing in of the deeper area into the retaining groove (40) causes a clamping of the head (30) in the retaining groove (40).

6. Solar module fastening system (20) according to claim 4 or 5, **characterized in that** the depth of the head (30) in the circumferential direction continuously increases preferably counterclockwise.

7. Solar module fastening system (20) according to one of claims 1 to 6, **characterized in that** the head (30) has, on at least one outer side, roughness increasing structures for increasing a frictional engagement in the securing position.

8. Method for fastening an element on a rail (22) of a solar module fastening system (20) according to one of claims 1 to 7, **characterized by** the subsequent method steps:
- fastening the rail (22) to a substrate,
- aligning the securing bolt (26) with respect to the through opening (24) and the groove wall (32),
- inserting the securing bolt (26) into the through opening (24) of the wall (23),
- guiding the head (30) of the securing bolt (26) past the groove wall (32) into a starting position of the securing bolt (26),
- rotating the securing bolt (26) about the longitudinal axis of the shaft (28) from the starting position into a securing position, in which the head (30) projects in sections into the retaining groove (40).

## Revendications

1. Système de fixation (20) d'un module solaire, pourvu d'au moins un rail (22) susceptible d'être fixé sur un support, notamment sur un toit, pour la fixation d'éléments d'une installation solaire, le rail (22) comportant une paroi (23) dotée d'un orifice de passage (24), à travers lequel l'on peut introduire un boulon de blocage (26),
**caractérisé en ce que**
- sous l'orifice de passage (24) est placée une rainure de maintien (40) en forme de U, qui
- comporte une paroi (32) de rainure s'étendant approximativement à la parallèle de la paroi (23), qui par l'intermédiaire d'un fond inférieur (34) de rainure est relié avec la paroi (23),
- est ouverte dans la direction de l'orifice de passage (24),
- le boulon de blocage (26) comporte une tige (28) et une tête (30), qui sont conçues et placées de telle sorte que
- dans une position de départ, dans laquelle la tige (28) est introduite dans l'orifice de passage (24) jusqu'à la butée de la tête (30) sur la paroi (23), la tête (30) soit placée à l'extérieur de la rainure de maintien (40),
- dans une deuxième position de blocage, dans laquelle le boulon de blocage (26) est tourné par rapport à la position de départ autour d'un axe longitudinal de la tige, la tête (30) saillisse par endroits dans la rainure de maintien (40).

2. Système de fixation (20) d'un module solaire selon la revendication 1, **caractérisé en ce que** la tige (28) du boulon de blocage est reliée de manière excentrée avec la tête (30).

3. Système de fixation (20) d'un module solaire selon la revendication 1, **caractérisé en ce que** la tête (30) du boulon de blocage (26) est conçue de manière non ronde.

4. Système de fixation (20) d'un module solaire selon la revendication 1, **caractérisé en ce que** la profondeur de la tête (30) du boulon de blocage (26) est conçue de différentes manières dans la direction périphérique, la profondeur maximale de la tête (30) correspondant approximativement à une largeur libre (NB) de la rainure de maintien (40).

5. Système de fixation (20) d'un module solaire selon la revendication 1, **caractérisé en ce que** la profondeur maximale dépasse la largeur libre (NB) de la rainure de maintien (40), de telle sorte qu'un vissage dans la zone la plus profonde dans la rainure de maintien (40) provoque un serrage de la tête (30) dans la rainure de maintien (40).

6. Système de fixation (20) d'un module solaire selon la revendication 4 ou 5, **caractérisé en ce que** la profondeur de la tête (30) augmente en continu dans la direction périphérique, de préférence dans le sens antihoraire.

7. Système de fixation (20) d'un module solaire selon l'une quelconque des revendications 1 à 6, **caractérisé en ce que**, sur au moins une face extérieure, la tête (30) comporte des structures augmentant la rugosité, pour augmenter une liaison par friction dans la position de blocage.

8. Procédé, destiné à fixer un élément sur un rail (22) d'un système de fixation (20) d'un module solaire selon l'une quelconque des revendications 1 à 7, **caractérisé par** les étapes de procédé suivantes, consistant à
- fixer le rail (22) sur un support,
- orienter le boulon de blocage (26) en rapport à l'orifice de passage (24) et à la paroi (32) de rainure,
- introduire le boulon de blocage (26) dans l'orifice de passage (24) de la paroi (23),
- faire passer la tête (30) du boulon de blocage (26) devant la paroi (32) de rainure dans une position de départ du boulon de blocage (26),
- faire tourner le boulon de blocage (26) autour de l'axe longitudinal de la tige (28), de la position de départ dans une position de blocage, dans laquelle la tête (30) saillit par endroits dans la rainure de maintien (40).
